# EUROPEAN PATENT SPECIFICATION

(11) **EP 0 501 039 B1**
(45) Date of publication and mention of the grant of the patent: **06.03.1996**
(21) Application number: 91122102.6
(22) Date of filing: 23.12.1991
(51) Int. Cl.: F16B 12/26

(54) **Device for the removable coupling of two elements**
Vorrichtung für die abnehmbare Verbindung von zwei Elementen
Dispositif pour l'accouplement amovible de deux éléments

(30) Priority: 25.02.1991 IT BO910030 U
(43) Date of publication of application: 02.09.1992
(73) Proprietor: ITERBY ITALIANA MOBILI S.r.l., I-61025 Montelabbate (Province of Pesaro) (IT)
(72) Inventor: Berloni, Massimo, I-61100 Pesaro (IT)
(74) Representative: Modiano, Guido, Dr.-Ing.

(56) References cited:
- EP-A- 0 169 572
- EP-A- 0 240 280
- FR-A- 1 487 153
- FR-A- 2 193 432
- GB-A- 2 179 419

## Description

The present invention relates to a device for the removable coupling of two elements.

The device is particularly suitable for mutually coupling the back or rear panel of a piece of furniture, such as a wardrobe, to the side panels thereof.

Devices which allow to fix the back to the side panels are already commercially known. However, they have proved themselves very awkward to install and scarcely practical in use, since they require the intervention of suitable tools when it is necessary to disassemble the piece of furniture or even the pre-disassembly of some parts of the piece of furniture which do not allow direct access to the device.

The technical aim of the present invention is therefore to provide a device which is capable of obviating the above disadvantages, i.e. allows, at any time and without tools, to disassemble a panel of the piece of furniture.

In order to solve these problems, document EP-A-0 240 280 discloses a quick release joint as defined in the preamble of appending claim 1.

Within the scope of this aim, an object of the present invention is to provide a device which is structurally simple and easy to apply, so as to be particularly convenient for purchase and application.

This aim and this object are achieved by a device for the removable coupling of two panels at substantially right angles, comprising a tang provided with an annular groove, a bush embedded in a first panel to be coupled and defining a seat, said tang being insertable in said seat, said bush being provided with an internal groove in which elastic means are accommodated, characterized in that said tang is rigidly associated with a wing having means for fixing to a second panel to be coupled, said elastic means are constituted by a toroidal ring made of elastic, rubber-like material, and the outer surface of said tang is substantially equal in shape to inner surface of said seat.

Further advantages and characteristics of the device according to the invention will become apparent from the following description of a preferred embodiment thereof, with reference to the accompanying drawings, wherein:
figure 1 is a sectional view of the device according to the present invention;
figure 2 is a perspective view of the device of figure 1;
figure 3 is a view of a variated embodiment of the device of the preceding figures;
figures 4, 5 and 6 are views of further variated embodiments.

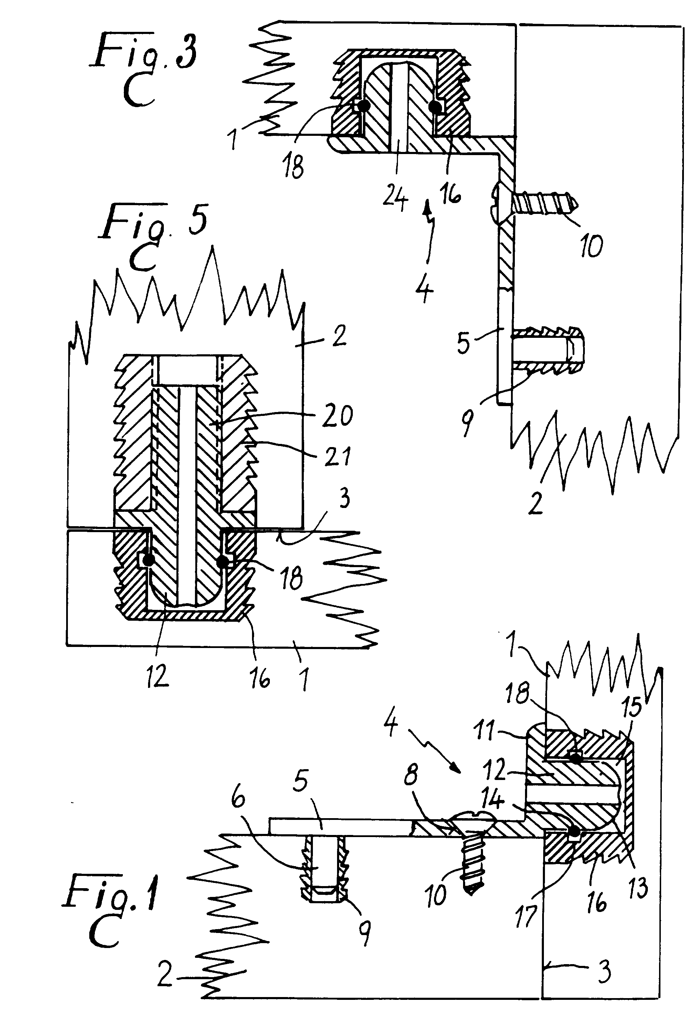

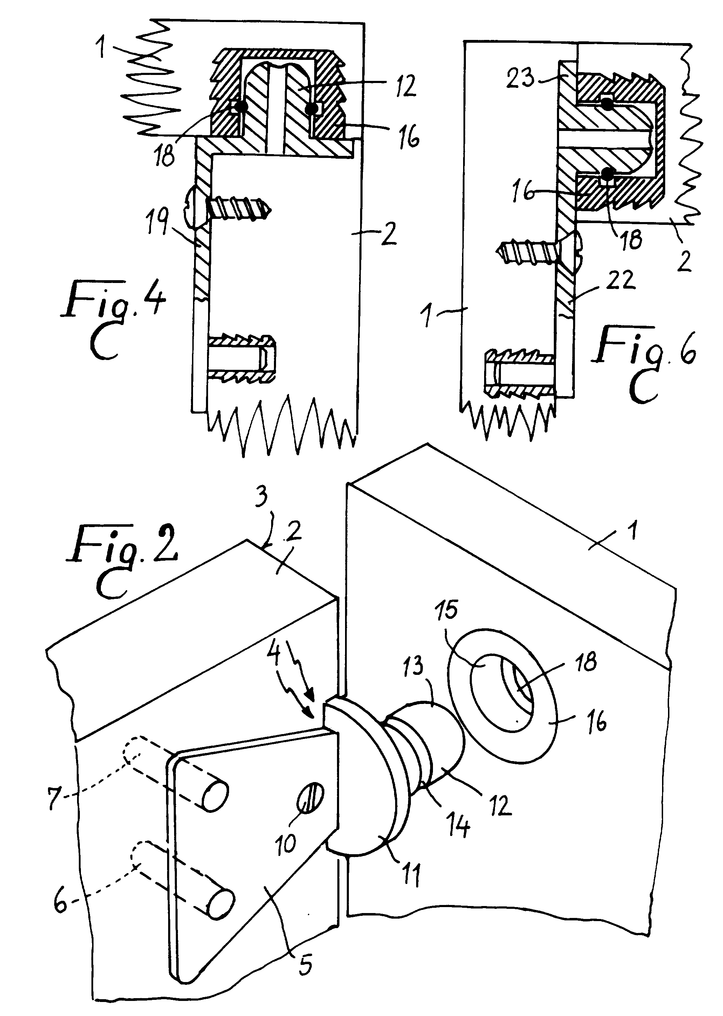

With reference to figures 1 and 2, the reference numeral 1 indicates a first element such as the rear panel or back of a piece of furniture, which is intended to be associated with a second element 2 such as the side panels for the rearward closing of the piece of furniture.

In the illustrated example of figures 1 and 2, the back 1 abuts on the rear edges or heads 3 of the sides 2.

The device according to the invention which provides the coupling of the back 1 to the side panels 2 is generally indicated by the reference numeral 4 and comprises a plate 5 which has a trapezoid-like shape and has two cylindrical pins 6 and 7 at two corners and a hole 8 proximate to the shorter parallel side of the trapezoid.

The pins 6 and 7 are suitable for inserting themselves in corresponding bushes 9 which are embedded in respective cylindrical seats of the side panels 2, whereas a screw 10 is driven through the hole 8 and firmly fixes the plate 5 to the respective side panel by being screwed in said side panel.

A wing 11 rises from the plate 5 flush to the head 3, is perpendicular to the plate 5 and has a substantially semicircular shape.

A cylindrical tang 12 protrudes in a cantilevered manner from the wing 11, is rigidly associated therewith, and has an ogival end 13 and an annular groove 14 which has a semicircular cross-section.

The tang 12 is suitable for being removably accommodatable in a seat 15 of a bush 16 which is embedded in the back 1.

The bush 16 is of the cup-shaped type and has an internal groove 17 in which a toroidal ring 18, made of rubber-like material and commercially known as O-ring, is partially accommodated.

Conveniently, the bushes 9 and 16 have external saw-tooth collars which ensure their anchoring in their insertion seats.

The coupling of the back to the side panels, by means of the described device occurs simply by inserting the tang 12 in the bush 16 until the ring 18 engages in the groove 14. Conveniently, in order to avoid an excessively slack coupling, the ring 18 has an inner diameter which does not exceed, or is slightly smaller than, the diameter of the groove 14 of the tang 12. In this manner, the force with which the back 1 is coupled to, or removed from, the side panels depends on the effort required to make the ring 18 leave the groove 14.

According to a prerogative of the invention, the play with which the tangs 12 are engaged in the seats 15 of the bushes allows to insert and remove the tangs in succession and thus with a smaller effort.

The retention force can furthermore be increased or reduced according to the requirements simply by varying the diameter of the toroidal rings or by acting on the depth of the groove 14.

The device can also be applied when the back 1 must be sunk between the sides 2, so that its upper face is flush with the heads (see figure 3).

In one embodiment (see figure 4) it is possible to adopt plates 19 which can be reversed so that the tang 12 protrudes from the head of the side panel.

A further embodiment (see figure 5) provides, instead of the plate, a threaded stem 20 which is coaxial to the tang and is screwed in a bush 21 inserted in the head 3 of the side panel.

It is also possible to provide solutions which are complementary to the preceding ones, i.e. in which the plate 22 is co-planar to the wing 23 and is fixed to the back and the bush 16, with the ring 18, is accommodated in the head 3 of the side panels 2, as illustrated in figure 6.

As can be seen, the described invention perfectly achieves the intended aim and objects.

In particular, it can also be used to join two panels which are arranged in the same plane and are in mutual contact along their heads.

For this purpose it is possible to use for example the versions illustrated in figures 5 and 6, making sure, in the case of figure 6, that the plate is narrower than the thickness of the heads, so as to remain concealed when the heads abut.

Advantageously, the tang 12 is axially traversed by a through hole 24 to avoid the forming of a closed chamber in which air remains compressed and may push the tang 12 back out when said tang 12 is inserted in the seat 15.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Device (4) for the removable coupling of two panels (1,2) at substantially right angles, comprising
a tang (12) provided with an annular groove (14),
a bush (16) embedded in a first panel (1) to be coupled and defining a seat (15),
said tang (12) being insertable in said seat (15),
said bush (16) being provided with an internal groove (17) in which elastic means are accommodated,
characterized in that said tang (12) is rigidly associated with a wing (11,23) having means (5) for fixing to a second panel (2) to be coupled,
said elastic means are constituted by a toroidal ring (18) made of elastic, rubber-like material, and
the outer surface of said tang (12) is substantially equal in shape to inner surface of said seat (15).

2. Device, according to claim 1, characterized in that said tang (12) is of substantially cylindrical shape.

3. Device according to claim 2, characterized in that a said wing (11,23) is provided with a threaded stem (20) which can be screwed in said bush (21) embedded in said second panel (2) to be coupled.

4. Device according to one of the preceding claims, characterized in that said means for fixing to said second panel (2) are constituted by a plate (5,19,22) rigidly associated with said wing (11,23).

5. Device according to any one of the preceding claims, characterized in that said bushes (16,21) have outer collars for anchoring in their respective insertion seats.

## Patentansprüche

1. Vorrichtung (4) für die abnehmbare Verbindung von zwei Platten (1,2) unter im wesentlichen rechten Winkeln, welche umfaßt
einen Zapfen (12), der mit einer ringförmigen Nut (14) versehen ist,und
eine Buchse (16), die in eine erste zu verbindende Platte (1) eingebracht ist und einen Sitz (15) bestimmt,
wobei der Zapfen (12) in den Sitz (15) einfügbar ist und
wobei die Buchse (16) mit einer inneren Nut (17) versehen ist, in der ein elastisches Mittel untergebracht ist,
**dadurch gekennzeichnet**,
daß der Zapfen (12) mit einem Flügel (11,23) starr verbunden ist, der Mittel (5) zur Befestigung an einer zweiten zu verbindenden Platte (2) aufweist,
daß das elastische Mittel von einem Ankerring (18) aus elastischem, gummiähnlichem Material gebildet ist und
daß die äußere Fläche des Zapfens (12) der inneren Fläche des Sitzes (15) im wesentlichen gleich ist.

2. Vorrichtung nach Anspruch 1, **dadurch gekennzeichnet**, daß der Zapfen (12) eine im wesentlichen zylindrische Form aufweist.

3. Vorrichtung nach Anspruch 2, **dadurch gekennzeichnet**, daß der Flügel (11,23) mit einem ein Gewinde aufweisenden Stiel (20) versehen ist, der in die Buchse (21) einschraubbar ist, die in die zweite zu verbindende Platte (2) eingebracht ist.

4. Vorrichtung nach einem der vorhergehenden Ansprüche, **dadurch gekennzeichnet**, daß das Mittel zur Befestigung an der zweiten Platte (2) von einer Platte (5,19,22) dargestellt ist, die mit dem Flügel (11,23) starr verbunden ist.

5. Vorrichtung nach einem der vorhergehenden Ansprüche, **dadurch gekennzeichnet**, daß die Buchsen (16,21) äußere Kragen zur Verankerung in deren zugeordneten Einfügungs-Sitzen haben.

## Revendications

1. Dispositif (4) pour l'accouplement amovible de deux panneaux (1, 2) à angle sensiblement droit, comprenant :
un tenon (12) muni d'une gorge annulaire (14),
une douille (16) incorporée dans un premier panneau (1) à accoupler et définissant un siège (15),
ledit tenon (12) pouvant s'insérer dans ledit siège (15),
ladite douille (16) étant munie d'une gorge interne (17) dans laquelle sont logés des moyens élastiques,
caractérisé en ce que ledit tenon (12) est associé à une aile (11, 23) ayant des moyens (5) pour se fixer à un deuxième panneau (2) à accoupler,
lesdits moyens élastiques sont constitués d'une bague toroïdale (18) fabriquée dans un matériau élastique de type caoutchouc, et
la surface extérieure dudit tenon (12) est de forme substantiellement identique à celle de la surface intérieure du siège (15).

2. Dispositif selon la revendication 1, caractérisé en ce que ledit tenon (12) est forme sensiblement cylindrique.

3. Dispositif selon la revendication 2, caractérisé en ce qu'une dite aile (11, 23) est munie d'une tige filetée (20) qui peut être vissée dans ladite douille (21) incorporée dans ledit deuxième panneau (2) à accoupler.

4. Dispositif selon l'une quelconque des revendications précédentes, caractérisé en ce que lesdits moyens de fixation audit deuxième panneau (2) sont constitués d'une plaque (5, 19, 22) associée rigidement à ladite aile (11, 23).

5. Dispositif selon l'une quelconque dès revendications précédentes, caractérisé en ce que lesdites douilles (16, 21) ont des colliers extérieurs pour s'ancrer dans leurs sièges d'insertion respectifs.
